# EUROPEAN PATENT SPECIFICATION

(11) **EP 2 874 292 B1**
(45) Date of publication and mention of the grant of the patent: **27.09.2017**
(21) Application number: 13193361.6
(22) Date of filing: 18.11.2013
(51) Int. Cl.: H02K 44/08

(54) **Thermoacoustic magnetohydrodynamic electric generator**
Thermoakustischer magnetohydrodynamischer Elektrogenerator
Générateur électrique magnétohydrodynamique thermoacoustique

(43) Date of publication of application: 20.05.2015
(73) Proprietor: Centre National de la Recherche Scientifique, 75794 Paris Cedex 16 (FR); UNIVERSITA' DEGLI STUDI DI CAGLIARI, 09124 Cagliari (IT)
(72) Inventor: ROUX, Jean-Pierre, 13090 Aix en Provence (FR); ALEMANY, Antoine, 38410 Saint Martin d'Uriage (FR); Montisci, Augusto, 09040 Senorbi (Cagliari) (IT)
(74) Representative: Borsano, Corrado

(56) References cited:
- EP-A2- 2 383 530
- DE-T2- 60 303 737
- US-A- 3 736 447
- US-A- 4 599 551
- ANTOINE ALEMANY ET AL: "Thermo acoustic - MHD electrical Generator", ENERGY PROCEDIA, vol. 6, no. 6, 1 January 2011 (2011-01-01) , pages 92-100, XP055109941, ISSN: 1876-6102, DOI: 10.1016/j.egypro.2011.05.011

## Description

### TECHNICAL FIELD

The present invention relates to engines enabling to convert a heat flow in electricity. More particularly, the invention concerns a thermo acoustic magnetohydrodynamic electric generator.

### BACKGROUND

US patent No. 4,599,551 describes a thermo acoustic magneto hydrodynamic electric generator using a thermoacoustic engine comprising an elongated housing filed with a conductive liquid metal positioned in the magnetic field of a magnet. The thermo acoustic engine further comprises a thermo acoustic structure and heat exchangers thermally coupled thereto, by which heat is introduced into and withdrawn from the liquid in such a manner as to induce and maintain resonant acoustic oscillation in the liquid. The housing is oriented so that the direction of reciprocal acoustic oscillation of the liquid metal is substantially orthogonal to the axis of the magnetic field. As a consequence of the reciprocal oscillation of the liquid in the presence of the magnetic field, an electric potential is produced in the liquid, which alternates at the frequency of the acoustic vibration of the liquid. The generator further includes electrical conductors connected to the liquid at the opposite sides of the housing. The conductors lie along an axis which extends substantially orthogonally with respect to both the axis of the magnetic field and the axis of the reciprocal oscillation of the liquid.

This thermo acoustic magneto hydrodynamic electrical generator produces a High current intensity and a low voltage on the order of one volt. This is a bad characteristic for space application and on the other side the necessity to use electrodes to collect the electric current is another difficulty relating to the water thickness.

This generator is difficult to be used in space due to the absence of gravity which necessitates special equipment to stabilize the liquid gas interface. Moreover, the inertia of the liquid metal limits the range of frequency.

### SUMMARY OF THE INVENTION

The technical problem to solve is then to provide an improved thermo acoustic magneto hydrodynamic electrical generator which can be used in every kind of applications, which is mechanically resistant and which presents a low inertia which an element to obtain a good efficiency.

To solve this problem, the invention proposes a thermo acoustic magneto hydrodynamic electrical generator comprising at least a thermo acoustic engine coupled to a magneto hydrodynamic (MHD) generator in order to produce electricity from thermal power, wherein the conductive fluid is a gas ionized by an electric arc.

More precisely, the invention relates to an electric generator comprising:
- At least a first thermo acoustic engine comprising:
   - a first thermo acoustic housing filed with a fluid,
   - a thermo acoustic structure positioned in said fluid and able to have a first part thermally connected to a warm source and a second part thermally connected to a cold source for inducing an oscillating movement of the fluid within the first thermo acoustic housing;
- a magneto hydrodynamic (MHD) generator comprising :
   - an MHD housing filed with the same fluid as the first thermo acoustic housing, the MHD housing being in fluidic communication with the first thermo acoustic housing so that the fluid of the MHD housing is subjected to an oscillating movement when the fluid of the first thermo acoustic housing is subjected to an oscillating movement;
   - MHD means to convert the oscillating movement of the fluid into electricity;
the fluid being a gas, the magneto hydrodynamic generator further comprising ionization means to ionize the gas in the MHD housing so that it becomes electrically conductive.

Thanks to the use of a gas as conductive fluid in the MHD generator, the same fluid can be used in the thermo acoustic engine and in the MHD generator and consequently, the electric generator is simplified. Moreover, the use of a gas as conductive fluid and as oscillating fluid enables to reduce the inertia of the electric generator. Moreover, the electric generator can be used even in absence of gravity because it suppresses the interface between a gas and a liquid.

The electric generator can also comprise one or several of the following features, taken individually or according to all possible technical combinations:
- the ionization means comprise a high tension generator able to maintain the ionization of the gas;
- the best gas that could be used for the thermo acoustic engine seems to be helium due to its relatively (in comparison with the other gas) good thermal conductivity.
- the MHD means comprise at least a first coil and preferably also a second coil, each coil surrounding the MHD housing. An induced current is generated in each coil when the conductive fluid oscillated inside the MHD housing.
- the ionized gas comprises positive loads and negative loads,
- the MHD means comprise two polarized electrodes able to separate the positive loads from the negative loads. The two polarized electrodes are preferably linked to a high voltage power supply enabling to polarize the electrodes and to separate the positive and the negative loads of the ionized gas. The separation of the loads enables to maintain the gas in the ionized form and to generate a current in the coils;
- the polarized electrodes are able to locate the positive loads in a part of the MHD housing surrounded by the first coil and the negative loads in a part of the MHD housing surrounded by the second coil in order to generate a current in the first coil and in the second coil when the gas oscillated in the MHD fluid;
- the first coil and the second coil are preferably connected to a load;
- each coil is toroidal;
- the electric generator can be composed by one or two thermo acoustic engines in fluidic communication with the MHD housing.
- In the case of two thermo acoustics engines the MHD generator will be located in between for transforming the mechanical power of each in electricity.
- The thermo acoustic engine can be on the form of standing wave concept or traveling wave concept. In this last case the Thermo acoustic engine is on the form of a closed loop allowing the acoustic wave to run continuously along the loop. The thermo dynamic efficiency of such a concept seems to be better than the concept of standing wave.

### BRIEF DESCRIPTION OF THE DRAWINGS

Figure 1 represents a schematic view of an electrical generator according to one embodiment of the invention corresponding to one traveling wave thermo acoustic engine and one MHD generator. The absorbing structure is called the resonator and has for objective to permit the fluid oscillation due to the pressure oscillation of the thermo acoustic effect.
Figure 2 represents another schematic view of the electrical generator of figure 1.

### DETAILED DESCRIPTION

The present invention will now be described with reference to the accompanying drawings. The drawings are intended to provide one example of how the invention can be implemented and are not intended to limit the applicability of the present invention.

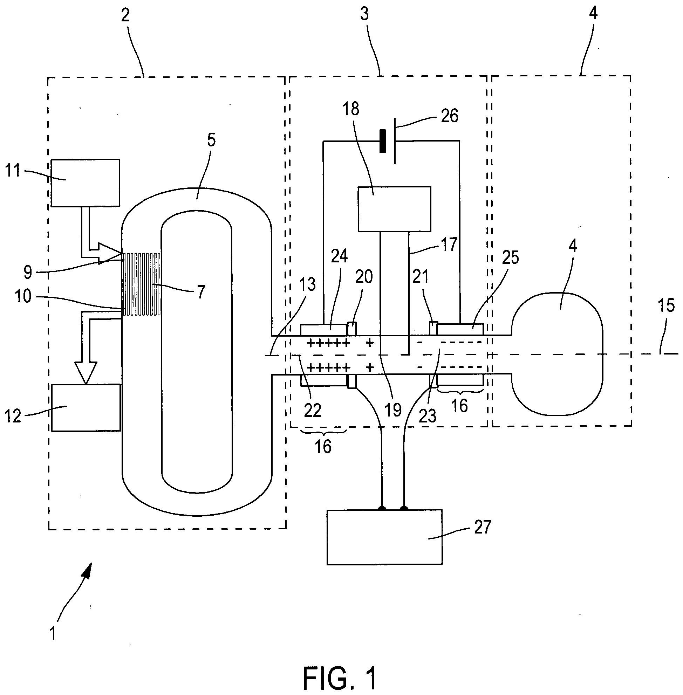

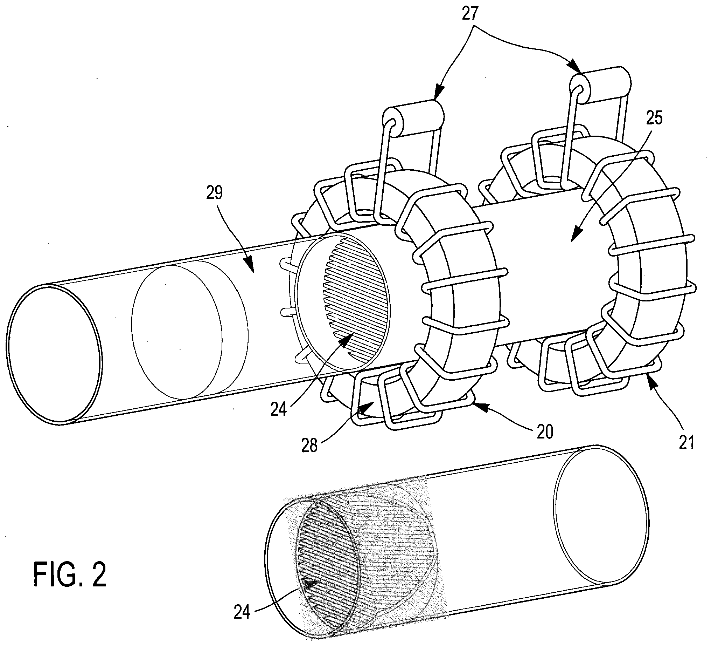

Figures 1 and 2 represent an electric generator 1 comprising a first thermoacoustic engine 2, a magneto hydrodynamic (MHD) generator 3 and a resonator 4.

The first thermoacoustic engine 2 enables to convert thermal energy in kinetic energy. To that purpose, the first thermoacoustic engine 2 comprises a first thermoacoustic housing 5 filed with a fluid.

The fluid is a gas. The gas will be preferably helium which has a relatively good thermal conductivity which is important in the process of conversion of heat in mechanical power. It is possible to adjust the physical properties of the fluid by mixing helium with another gas. Air is an example and has been tested allowing modifying the frequency of the thermo acoustic waves and the performance of the thermo acoustic engine.

The first thermo acoustic housing 5 forms preferably a loop. The first thermo acoustic engine 2 comprises a thermo acoustic structure 7 placed in the first thermo acoustic housing 5. The thermo acoustic structure 7 comprises preferably a stack. The thermo acoustic structure 7 comprises a first extremity 9 and a second extremity 10. The first extremity 9 is thermally coupled with a warm source 11 in order to inject heat in the fluid, while the second extremity 10 is coupled with a cold source 12 in order to withdraw heat from the fluid. The difference of temperature between the two extremities of the thermo acoustic structure induces oscillations in the fluid within the first thermo acoustic housing. The thermo acoustic structure into which heat is introduced and withdrawn from the fluid enables then to induce and maintain resonant acoustic oscillation in the fluid. The thermo acoustic engine 2 enables then to convert a difference of temperature between the warm source 11 and the cold source 12 in an oscillating movement of the fluid.

The MHD generator 3 enables to convert the oscillating movement of the fluid into electricity. To that purpose, the MHD generator 3 comprises a MHD housing 13. The MHD housing preferably extends along a reference axis 15. The MHD housing 13 comprises a first extremity 22 and a second extremity 23. The first extremity 22 is connected to the first thermo acoustic housing 5. The second extremity 23 is connected to the resonator 4. The MHD housing 13 is filed with the same fluid as the first thermo acoustic housing 5. The MHD housing 13 is in fluidic communication with the first thermo acoustic housing 5 so that the fluid of the MHD housing is subjected to an oscillatory movement when the fluid of the first thermoacoustic housing 5 is subjected to an oscillatory movement. The oscillatory movement of the fluid in the MHD housing occurs along the reference axis 15 of the MHD housing 15.

The MHD generator 3 also comprises ionization means 17 enabling to ionize the gas. The ionization means 17 comprise a high tension generator 18 able to generate an electric arc enabling to ionize the gas. To that purpose, the high tension generator 18 maintains a high voltage between ionization electrodes 19. The ionization electrodes 19 are preferably placed within the MHD housing 13. The level of voltage necessary to maintain the gas in ionized form depends on the level of power that must be produced by the MHD generator and of the gas properties. It depends also of the global geometry of the stack of electrodes and specifically on the gap between them. Typically a value of several times ten thousand volts can be required to produce a good ionization able to give a sufificiently high electrical conductivity to the fluid

The MHD generator 3 also comprises MHD means 16 enabling to convert the oscillating movement of the fluid into electricity. These MHD means 16 comprises a first coil 20 and a second coil 21. These coils are preferably toroidal. Each coil surrounds one extremity 22, 23 of the MHD housing. The MHD means 16 also comprise polarized electrodes 24, 25 enabling to separate the positive loads from the negative loads of the ionized gas. To that purpose, the polarized electrodes 24, 25 are connected to a high voltage power supply 26. The polarized electrode 24 maintains the positive loads of the ionized gas in the part of the MHD housing which is surrounded by the first coil 20. The polarized electrode 25 maintains the negative loads of the ionized gas in the part of the MHD housing which is surrounded by the second coil 21. The thermoacoustic structure 7 creates oscillating movements in the gas of the thermoacoustic housing 5. Consequently, the positive loads oscillate in the part of the MHD housing which is inside the first coil so that a current is generated in the first coil. For the same reasons, the negative loads oscillated in the part of the MHD housing which is inside the second coil so that a current is generated in the second coil.

The first coil 20 and the second coil 21 are preferably connected to a load 27 receiving the current generated in the first and the second coil. Each coil surrounds a torroidal ferromagnetic core 28 to obtain a sufficiently high magnetic field.

The electric generator enables to produce easily current, with a low inertia and even in the absence of gravity.

## Claims

1. Electric generator (1) comprising:
- At least a first thermo acoustic engine (2) comprising:
- a first thermo acoustic housing (5) filed with a fluid,
- a thermo acoustic structure (7) positioned in said fluid and able to have a first part (9) thermally connected to a warm source (11) and a second part (10) thermally connected to a cold source (12) for inducing an oscillating movement of the fluid within the first thermoacoustic housing (5);
- a magneto hydrodynamic generator (3) comprising :
- an MHD housing (13) filed with the same fluid as the first thermo acoustic housing (5), the MHD housing (13) being in fluidic communication with the first thermo acoustic housing (5) so that the fluid of the MHD housing (13) is subjected to an oscillating movement when the fluid of the first thermo acoustic housing (5) is subjected to an oscillating movement;
- MHD means (16) to convert the oscillating movement of the fluid into electricity; wherein the fluid is a gas, the magneto hydrodynamic generator (3) further comprising ionization means (17) to maintain the gas in ionized form in the MHD housing (13) so that it becomes electrically conductive.

2. Electric generator (1) according to claim 1, wherein the ionization means (17) comprise a high voltage generator (18) able to generate high voltage enabling to ionize the gas.

3. Electric generator according to any of the previous claims, wherein the gas 29 comprises either pure helium or a mixing of helium with another gas.

4. Electric generator according to any of the previous claims, wherein the MHD means (16) comprise a first coil (20) and a second coil (21), the first coil (20) and the second coil (21) surrounding the MHD housing (13).

5. Electric generator (1) according to any of the previous claims, wherein the ionized gas comprises positive loads and negative loads, the MHD means (16) comprising several polarized stack electrodes (24, 25) able to separate the positive loads from the negative loads.

6. Electric generator (1) according to claims 4 and 5, wherein the polarized electrodes (24, 25) are able to locate the positive loads in a part (22) of the MHD housing (13) surrounded by the first coil (20) and the negative loads in a part (23) of the MHD housing (13) surrounded by the second coil (21).

7. Electric generator (1) according to any of the previous claims, further comprising a resonator (4) connected to the MHD housing.

8. Electric generator (1) according to the previous claim, wherein the resonator (4) can be replaced by a second thermo acoustic engine comprising a second thermo acoustic housing in fluidic communication with the MHD housing.

9. Electric generator according to any of the previous claims, wherein each thermo acoustic housing (5) forms a loop.

## Patentansprüche

1. Elektrischer Generator (1) umfassend:
- wenigstens einen ersten thermoakustischen Motor (2) umfassend:
- ein erstes thermoakustisches Gehäuse (5) das mit einem Fluid gefüllt ist,
- eine thermoakustische Struktur (7), die in dem Fluid angeordnet ist und dazu eingerichtet ist, einen ersten Teil (9) thermisch mit einer Wärmequelle (11) zu verbinden, und einen zweiten Teil (10) thermisch mit einer Kältequelle (12) zu verbinden, zum Induzieren einer oszillierenden Bewegung des Fluids innerhalb des ersten thermoakustischen Gehäuses (5);
- einen magneto-hydrodynamischen Generator (3), umfassend:
- ein MHD-Gehäuse (13), das mit demselben Fluid gefüllt ist wie das erste thermoakustische Gehäuse (5), wobei das MHD-Gehäuse (13) mit dem ersten thermoakustischen Gehäuse (5) in Fluidverbindung steht, so dass das Fluid des MHD-Gehäuses (13) einer oszillierenden Bewegung ausgesetzt wird, wenn das Fluid des ersten thermoakustischen Gehäuses (5) einer Schwingbewegung ausgesetzt ist;
- MHD-Mittel (16) zum Wandeln der oszillierenden Bewegung des Fluids in Elektrizität;
wobei
das Fluid ein Gas ist, und der magneto-hydrodynamische Generator (3) zudem lonisationsmittel (17) umfasst, um das Gas in ionisierter Form in dem MHD-Gehäuse (13) aufrecht zu erhalten, so dass es elektrisch leitend wird.

2. Elektrischer Generator (1) nach Anspruch 1, wobei die lonisationsmittel (17) einen Hochspannungsgenerator (18) umfassen, der dazu eingerichtet ist, eine Hochspannung zu erzeugen, die es ermöglicht, das Gas zu ionisieren.

3. Elektrischer Generator nach einem der vorstehenden Ansprüche, wobei das Gas 29 entweder reines Helium oder eine Mischung von Helium mit einem anderen Gas umfasst.

4. Elektrischer Generator nach einem der vorstehenden Ansprüche, wobei die MHD-Mittel (16) eine erste Spule (20) und eine zweite Spule (21) umfassen, wobei die erste Spule (20) und die zweite Spule (21) das MHD-Gehäuse (13) umschließen.

5. Elektrischer Generator (1) nach einem der vorstehenden Ansprüche, wobei das ionisierte Gas positive Ladungen und negative Ladungen umfasst, wobei die MHD-Mittel (16) mehrere polarisierte Stapelelektroden (24, 25) umfassen, die dazu eingerichtet sind, die positiven Ladungen von den negativen Ladungen zu trennen.

6. Elektrischer Generator (1) nach Anspruch 4 und 5, wobei die polarisierten Elektroden (24, 25) dazu eingerichtet sind, die positiven Ladungen in einem Teil (22) des von der ersten Spule (20) umschlossenen MHD-Gehäuses (13) zu lokalisieren und die negativen Ladungen in einem Teil (23) des von der zweiten Spule (21) umschlossenen MHD-Gehäuses (13) zu lokalisieren.

7. Elektrischer Generator (1) nach einem der vorstehenden Ansprüche, zudem umfassend, einen Resonator (4) der mit dem MHD-Gehäuse verbunden ist.

8. Elektrischer Generator (1) nach dem vorstehenden Anspruch, wobei der Resonator (4) durch einen zweiten thermoakustischen Motor ersetzt werden kann, der ein zweites thermoakustisches Gehäuse in Fluidverbindung mit dem MHD-Gehäuse umfasst.

9. Elektrischer Generator nach einem der vorstehenden Ansprüche, wobei jedes thermoakustische Gehäuse (5) eine Schleife ausbildet.

## Revendications

1. Générateur d'électricité (1) comprenant :
- au moins un premier moteur thermoacoustique (2) comprenant :
- un premier logement thermoacoustique (5) rempli d'un fluide,
- une structure thermoacoustique (7) positionnée dans ledit fluide et apte à comporter une première partie (9) raccordée thermiquement à une source chaude (11) et une seconde partie (10) raccordée thermiquement à une source froide (12) pour induire un mouvement oscillant du fluide au sein du premier logement thermoacoustique (5) ;
- un générateur magnétohydrodynamique (3) comprenant :
- un logement MHD (13) rempli du même fluide que le premier logement thermoacoustique (5), le logement MHD (13) étant en communication fluidique avec le premier logement thermoacoustique (5) de sorte que le fluide du logement MHD (13) soit soumis à un mouvement oscillant lorsque le fluide du premier logement thermoacoustique (5) est soumis à un mouvement oscillant ;
- des moyens MHD (16) pour convertir le mouvement oscillant du fluide en électricité ;
dans lequel le fluide est un gaz, le générateur magnétohydrodynamique (3) comprenant en outre des moyens d'ionisation (17) pour maintenir le gaz sous forme ionisée dans le logement MHD (13) de sorte qu'il devienne électriquement conducteur.

2. Générateur d'électricité (1) selon la revendication 1, dans lequel les moyens d'ionisation (17) comprennent un générateur haute tension (18) apte à générer une haute tension permettant d'ioniser le gaz.

3. Générateur d'électricité selon l'une quelconque des revendications précédentes, dans lequel le gaz (29) comprend soit de l'hélium pur, soit un mélange d'hélium avec un autre gaz.

4. Générateur d'électricité selon l'une quelconque des revendications précédentes, dans lequel les moyens MHD (16) comprennent une première bobine (20) et une seconde bobine (21), la première bobine (20) et la seconde bobine (21) entourant le logement MHD (13).

5. Générateur d'électricité (1) selon l'une quelconque des revendications précédentes, dans lequel le gaz ionisé comprend des charges positives et des charges négatives, les moyens MHD (16) comprenant plusieurs électrodes empilées polarisées (24, 25) aptes à séparer les charges positives des charges négatives.

6. Générateur d'électricité (1) selon les revendications 4 et 5, dans lequel les électrodes polarisées (24, 25) sont aptes à localiser les charges positives dans une partie (22) du logement MHD (13) entourée par la première bobine (20) et les charges négatives dans une partie (23) du logement MHD (13) entourée par la seconde bobine (21).

7. Générateur d'électricité (1) selon l'une quelconque des revendications précédentes, comprenant en outre un résonateur (4) connecté au logement MHD.

8. Générateur d'électricité (1) selon la revendication précédente, dans lequel le résonateur (4) peut être remplacé par un second moteur thermoacoustique comprenant un second logement thermoacoustique en communication fluidique avec le logement MHD.

9. Générateur d'électricité selon l'une quelconque des revendications précédentes, dans lequel chaque logement thermoacoustique (5) forme une boucle.
